# EUROPÄISCHE PATENTSCHRIFT

(11) **EP 3 527 959 B1**
(45) Veröffentlichungstag und Bekanntmachung des Hinweises auf die Patenterteilung: **08.11.2023**
(21) Anmeldenummer: 18156673.8
(22) Anmeldetag: 14.02.2018
(51) Int. Cl.: G01F 23/284, G01S 13/88

(54) **FÜLLSTANDRADAR MIT ANHAFTUNGSDETEKTOR**
FILL LEVEL RADAR WITH ADHESION DETECTOR
RADAR DE DÉTECTION DE NIVEAU DE REMPLISSAGE POURVU DE DÉTECTEUR D'ADHÉRENCE

(43) Veröffentlichungstag der Anmeldung: 21.08.2019
(73) Patentinhaber: VEGA Grieshaber KG, 77709 Wolfach (DE)
(72) Erfinder: HAAS, Jürgen, 77709 Oberwolfach (DE); KASPAR, Stefan, 77716 Hofstetten (DE); SCHMIDT, Matthias, 78136 Schonach (DE)
(74) Vertreter: Maiwald GmbH

(56) Entgegenhaltungen:
- EP-A1- 3 078 943
- DE-A1-102014 114 963
- US-A1- 2016 146 658
- US-A1- 2017 045 492

## Beschreibung

### Gebiet der Erfindung

Die Erfindung betrifft die Füllstandmesstechnik. Insbesondere betrifft die Erfindung ein Füllstandradar zur kontinuierlichen Füllstandmessung, ein Verfahren zur kontinuierlichen Füllstandmessung, ein Programmelement und ein computerlesbares Medium.

### Hintergrund

Die kontinuierliche Füllstandmessung kann mittels eines Füllstandradars erfolgen, welches ein Radarsignal erzeugt und dieses entweder freistrahlend in Richtung Füllgutoberfläche abstrahlt, oder welches eine langgestreckte Sonde, beispielsweise in Form eines Stabes, Seiles oder Rohres, aufweist, entlang derer bzw. in welcher das Radarsignal in Richtung der Füllgutoberfläche geleitet wird.

Im letzteren Fall taucht die Sonde typischerweise in das Füllgut ein, so dass an der Grenzfläche zwischen Füllgut und Behälteratmosphäre ein Impedanzsprung auftritt, der im reflektierten Signal von der Auswerteelektronik des Füllstandradars detektierbar ist. Im Fall des freistrahlenden Füllstandradars ist eine Antenne vorgesehen, die das Radarsignal in Richtung Füllgutoberfläche abstrahlt.

Verschmutzungen an der Antenne bzw. der Sonde können dazu führen, dass das Messsignal verfälscht wird und gegebenenfalls ein falscher Füllstand ausgegeben wird.

US 2016/0146658 A1 beschreibt ein frei strahlendes Füllstandmessgerät, das nach dem TDR-Prinzip oder dem TDS-Prinzip arbeitet.

### Zusammenfassung der Erfindung

Vor diesem Hintergrund ist es eine Aufgabe der Erfindung, ein verbessertes Füllstandmessgerät anzugeben.

Diese Aufgabe wird durch die Merkmale der unabhängigen Patentansprüche gelöst. Weiterbildungen der Erfindung ergeben sich durch die Unteransprüche und die folgende Beschreibung von Ausführungsformen.

Ein erster Aspekt der Erfindung betrifft ein Füllstandradar zur kontinuierlichen Füllstandmessung, also insbesondere ein freistrahlendes Füllstandradar oder ein Füllstandradar, das geführte Radarsignale verwendet. Das Füllstandradar weist eine Radaranordnung auf, die eingerichtet ist zum Erzeugen und Abstrahlen eines Radarsignals in Richtung Füllgutoberfläche.

Auch ist eine Impedanzspektroskopieanordnung vorgesehen, mit deren Hilfe eine Anhaftung an der Radaranordnung, insbesondere an der Sonde (im Falle eines geführten Radarsignals) oder der Antenne (im Falle eines freistrahlenden Radargeräts) detektiert werden kann.

Auch kann die Impedanzspektroskopieanordnung eingerichtet sein, eine Gasphase des Füllguts mittels Impedanzspektroskopie zu detektieren.

Die Impedanzspektroskopieanordnung ist in der Radaranordnung integriert. Typischerweise ist die Sonde der Impedanzspektroskopieanordnung an der Stelle in oder an der Radaranordnung installiert, wo Verschmutzungen auftreten können und wo sie störend wirken können.

Auch kann das Füllstandradar mehrere solche Impedanzspektroskopieanordnungen aufweisen, beispielsweise wenn es mehrere Stellen gibt, an denen sich Verschmutzungen durch das Füllgut negativ auf das Messergebnis auswirken können.

Durch die Impedanzspektroskopieanordnung kann eine Anhaftung sicher detektiert werden. Insbesondere ist das Messgerät in der Lage, zu entscheiden, ob es sich um eine Anhaftung oder um einen gefüllten Zustand handelt, ob also die entsprechende Stelle der Antenne/Sonde, an der die Impedanzspektroskopieanordnung installiert ist, vom Füllgut bedeckt ist oder lediglich durch das Füllgut verschmutzt ist.

Auch kann die Impedanzspektroskopieanordnung eingerichtet sein, zu entscheiden, ob eine Dampfatmosphäre vorliegt, die vom Füllgut ausgeht, oder ob sich über der Füllgutoberfläche lediglich "normale" Luft befindet.

Durch die Impedanzspektroskopieanordnung kann der Wechselstromwiderstand in der Umgebung der Anordnung bestimmt werden. Dieser Wechselstromwiderstand, der auch Impedanz genannt wird, wird in Abhängigkeit von der Frequenz des angelegten Wechselstroms gemessen. Dazu wird die Impedanz bei mehreren Frequenzen über einen definierten Frequenzbereich (Spektrum) bestimmt. Der "Impedanzpeak" bzw. die Abhängigkeit der Impedanz von der Frequenz ändert sich mit dem Medium, in dem sich die Impedanzspektroskopieanordnung befindet. Taucht die Antenne/die Sonde in das Füllgut ein, weist die Impedanzkurve eine andere Form und typischerweise einen verschobenen Impedanzpeak auf, als bei dem Fall, in welchem die Antenne/die Sonde nicht von einem Füllgut umgeben ist. Ähnlich verhält es sich bei einer Anhaftung.

Erfindungsgemäß weist die Radaranordnung eine Sonde in Form eines Stabes, Seiles oder eines Rohres auf, die eingerichtet ist, das Radarsignal zur Oberfläche des Füllguts zu führen.

Erfindungsgemäß weist die Impedanzspektroskopieanordnung einen Messfühler auf, der in einer Dichtung der Sonde integriert ist.

Durch die Integration des Messfühlers in beispielsweise einem Dichtkonus der Sonde kann der Messfühler effektiv vor der Behälteratmosphäre geschützt werden. Der Dichtkonus ist beispielsweise aus isolierendem Material gefertigt, wie PEEK, PPS, PTFE oder Keramik.

Erfindungsgemäß ist der Messfühler ringförmig ausgeführt.

Erfindungsgemäß weist das Füllstandradar eine Antenne auf, die eingerichtet ist, das Radarsignal zur Oberfläche des Füllguts abzustrahlen. In diesem Fall ist der Messfühler in der Antenne integriert.

Erfindungsgemäß ist er streifenförmig oder kreuzförmig ausgeführt.

Insbesondere kann vorgesehen sein, dass die Antenne eingerichtet ist, das Radarsignal polarisiert abzustrahlen, wobei die Polarisationsebene des Radarsignals einen Winkel zu dem Messfühler von ungleich 0 Grad aufweist, also nicht parallel zu dem Streifen bzw. zu einem Schenkel des Kreuzes ausgerichtet ist, sondern schräg dazu, so dass es den Messfühler möglichst ungehindert oder nur geringfügig gehindert passieren kann.

Gemäß einer weiteren Ausführungsform der Erfindung weist das Füllstandradar eine Auswerteelektronik auf, die eingerichtet ist, das von der Füllgutoberfläche reflektierte Radarsignal auszuwerten, um daraus den Füllstand zu berechnen, und die von der Impedanzspektroskopieanordnung durchgeführte Messung (also die Impedanzspektroskopie) auszuwerten, um festzustellen, ob eine Anhaftung an der Radaranordnung vorliegt.

Insbesondere kann das Füllstandradar bzw. die Auswerteelektronik eingerichtet sein, mittels der Impedanzspektroskopie eine Anhaftung im Einkopplungsbereich der Sonde zu erkennen.

Die Auswerteeinrichtung kann auch ausgeführt sein, im Falle der Detektion einer Anhaftung oder einer Dampfatmosphäre, eine Messwertkorrektur am vom Füllstandradar detektierten Füllstand vorzunehmen. Auf diese Weise kann das Messergebnis verbessert werden.

Ein weiterer Aspekt der Erfindung betrifft ein Verfahren zur kontinuierlichen Füllstandmessung, bei dem eine Anhaftung an einer Radaranordnung eines Füllstandradars mittels Impedanzspektroskopie detektiert wird.

Ein weiterer Aspekt der Erfindung betrifft ein Programmelement, das, wenn es auf einer Auswerteelektronik eines Füllstandradars ausgeführt wird, die Auswerteelektronik anleitet, eine Anhaftung an eine Radaranordnung eines Füllstandradars mittels Impedanzspektroskopie zu detektieren.

Ein weiterer Aspekt der Erfindung betrifft ein computerlesbares Medium, auf dem das oben beschriebene Programmelement gespeichert ist.

Im Folgenden werden mit Verweis auf die Figuren Ausführungsformen der Erfindung beschrieben. Die Darstellungen in den Figuren sind schematisch und nicht maßstäblich. Werden in der folgenden Figurenbeschreibung die gleichen Bezugszeichen verwendet, so beschreiben diese gleiche oder ähnliche Elemente.

### Kurze Beschreibung der Figuren

Fig. 1 zeigt ein Füllstandradar gemäß einer Ausführungsform der Erfindung.
Fig. 2 zeigt ein Füllstandradar gemäß einer weiteren Ausführungsform der Erfindung.
Fig. 3 zeigt ein Füllstandradar gemäß einer weiteren Ausführungsform der Erfindung.
Fig. 4 zeigt eine schematische Darstellung des Aufbaus eines Füllstandradars gemäß einer Ausführungsform der Erfindung.
Fig. 5 zeigt eine schematische Darstellung des Aufbaus eines Füllstandradars gemäß einer weiteren Ausführungsform der Erfindung.
Fig. 6 zeigt ein Flussdiagramm eines Verfahrens gemäß einer Ausführungsform der Erfindung.
Fig. 7 zeigt drei Impedanzmesskurven eines Füllstandradars gemäß einer weiteren Ausführungsform der Erfindung.
Fig. 8 zeigt zwei Impedanzmesskurven eines Füllstandradars gemäß einer Ausführungsform der Erfindung.

### Detaillierte Beschreibung von Ausführungsformen

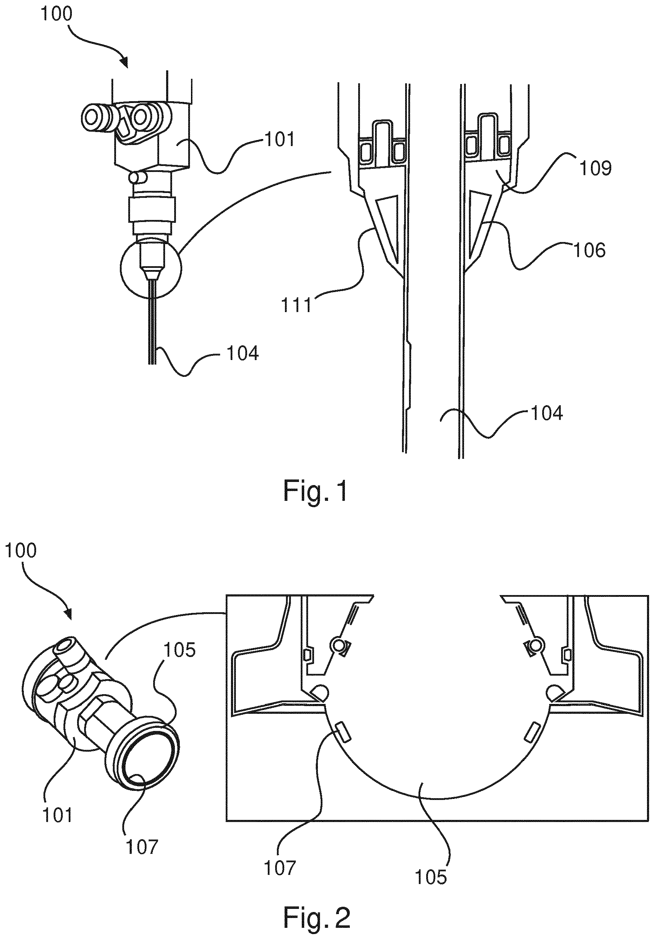

Fig. 1 zeigt ein Füllstandradar 100 mit einer Radaranordnung 101, welche eine Sonde in Form eines Stabes104 aufweist, und einer

Impedanzspektroskopieanordnung mit einem Messfühler 106. An der Einkoppelstelle (Einkopplungsbereich) 111 der Sonde 104 befindet sich ein isolierender Dichtkonus, in dem der Messfühler 106 integriert ist, so dass er vor der Behälteratmosphäre geschützt ist. Der Messfühler 106 ist beispielsweise ringförmig um die Sonde 104 angeordnet und wird verwendet, um die Impedanzspektroskopie durchzuführen.

Fig. 2 zeigt eine weitere Ausführungsform eines Füllstandradars 100, diesmal in Form eines freistrahlenden Radargeräts mit einer Antenne 105, die eine Isolierung aufweist, beispielsweise in Form einer PTFE-Linse, in der der Messfühler 107 der Impedanzspektroskopieanordnung integriert ist.

Auch im Falle der Fig. 2 kann der Messfühler ringförmig ausgeführt sein, mit einer Oberfläche, die beispielsweise parallel zur Oberfläche der Antennenabdeckung bzw. Linse angeordnet ist. Zwischen dem Messfühler 107 und der Behälteratmosphäre bzw. dem Füllgut befindet sich zumindest eine dünne Schicht des Linsen- bzw. Antennenabdeckungsmaterials, so dass der Messfühler gegenüber der Behälteratmosphäre elektrisch isoliert ist.

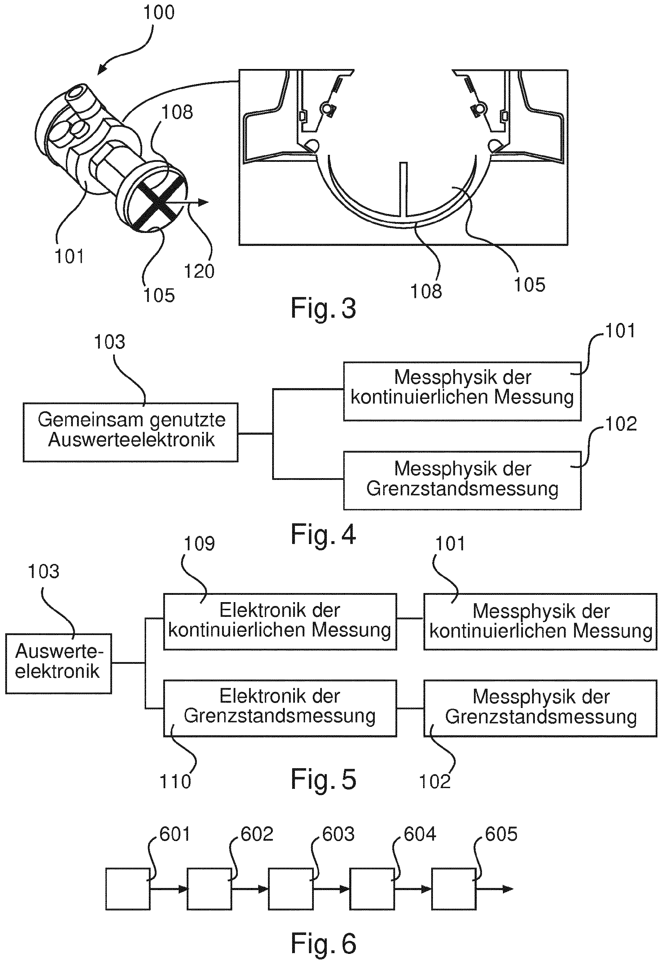

Fig. 3 zeigt eine weitere Ausführungsform eines Füllstandradars 100, wie auch in der Fig. 2 in Form eines freistrahlenden Radargeräts, bei dem jedoch der Messfühler 108 kreuzförmig ausgeführt ist. Der linke Bereich der Fig. 3 zeigt eine Draufsicht auf die Antenne, in welcher sich die kreuzförmige Ausführung erkennen lässt. Die Polarisationsebene des abgestrahlten Radarsignals ist durch den Pfeil 120 dargestellt.

Im rechten Bereich der Fig. 3 ist eine Schnittdarstellung durch die Antenne 105 gezeigt. Hier wird deutlich, dass der Messfühler 108 im Wesentlichen die Form der Antennenabdeckung bzw. Linse nachbildet, jedoch innerhalb der Linse angeordnet ist, so dass er durch das Linsenmaterial in Richtung Behälteratmosphäre isoliert ist.

Durch die Integration der Impedanzspektroskopieanordnung in das Füllstandradar kann eine sichere Überfüllerkennung gewährleistet werden. Auch ist es möglich, Anhaftungen im Einkopplungsbereich der Sonde/der Antenne zu erkennen, und es kann ermöglicht werden, dass das Füllstandradar zwischen den Anwendungen Trennschicht mit und ohne überlagerte Gasphase umschalten kann. "Trennschicht mit überlagerter Gasphase" bedeutet, dass sich eine (Füllgut-) Dampfatmosphäre oberhalb des flüssigen Füllguts befindet. "Trennschicht ohne überlagerte Gasphase" bedeutet, dass sich über dem Füllgut keine Dampfatmosphäre befindet, sondern ein leichteres Medium, beispielsweise Öl.

Durch das Füllstandradar mit integrierter Impedanzspektroskopieanordnung kann das kontinuierliche Füllstandmessverfahren verbessert werden, sowohl bei dem geführten als auch dem freistrahlenden Radargerät, um letztendlich die Anlagenverfügbarkeit sowie die Messsicherheit zu erhöhen.

Insbesondere können Anhaftungen im Einkopplungsbereich sicher erkannt werden. Diese Erkenntnis kann zum Anpassen der Empfindlichkeit im Nahbereich der Antenne und/oder zur Aktualisierung einer Störsignalausblendung zur Vermeidung von Messwertsprüngen eingesetzt werden.

Auch ist es möglich, durch die Kenntnis einer Anhaftung eine vorausschauende Wartung des Radars durchzuführen, und es können dem Kunden frühzeitig Informationen zur Verfügung gestellt werden, dass die Messung beeinflusst sein könnte.

Auch können die von der Impedanzspektroskopieanordnung detektierten Situationen (Sonde mit Anhaftung versehen/Dampfatmosphäre im Behälter/Sonde nicht mit Anhaftung versehen, aber vom Füllgut bedeckt) zur Korrektur des Messwertes herangezogen werden. Im Falle einer Dampfatmosphäre kann beispielsweise eine Laufzeitkorrektur erfolgen. Auch im Falle einer Anhaftung ist dies möglich, da die Laufzeit abhängig von der Schichtdicke der Anhaftung sein kann.

Durch die Impedanzspektroskopie kann eine sichere Überfüllerkennung bei allen Medien gewährleistet werden, unabhängig vom DK-Wert des Füllguts oder der Atmosphäre im Behälter und unabhängig davon, ob es sich bei dem Füllgut um eine Flüssigkeit oder ein Schüttgut handelt. Zusätzliche mechanische Komponenten im Prozess sind nicht erforderlich, da die Impedanzspektroskopieanordnung im Füllstandradar integriert ist. Letztendlich handelt es sich auch um ein redundantes Verfahren zur Überfüllerkennung.

Durch die Kombination der Füllstandmessung mit der Messung der Impedanzspektroskopie können die Messwerte der Impedanzspektroskopie zur Optimierung der Füllstandmessung verwendet werden und durch den redundanten Aufbau (also die Verwendung von zwei Messprinzipien (Radarsignal/ Impedanzspektroskopie)) wird eine zusätzliche Möglichkeit zur Erkennung einer Überfüllsituation geschaffen.

Fig. 4 zeigt eine schematische Darstellung eines Füllstandradars 100 gemäß einer Ausführungsform der Erfindung. Es ist eine gemeinsam genutzte Auswerteelektronik 103 vorgesehen, welche sowohl der Radaranordnung 101 als auch der Impedanzspektroskopieanordnung 102 zugeordnet ist und beide Messwerte verarbeitet. In dieser gemeinsamen Auswerteelektronik kann insbesondere die Steuerung und die Signalerzeugung sowohl der Radaranordnung als auch der Impedanzspektroskopieanordnung angeordnet sein.

Durch die Umschaltung der Frequenz der erzeugten Messsignale können beide Messphysiken durch dieselbe Auswerteelektronik (Hardware) realisiert werden.

Fig. 5 zeigt ein weiteres Beispiel eines Füllstandradars 100, bei dem beide Messphysiken 109, 110 separat aufgebaut sind, um einen redundanten Aufbau zu realisieren. Auch hier erfolgt jedoch die Messwertauswertung durch eine gemeinsame Auswerteelektronik 103.

Fig. 6 zeigt ein Flussdiagramm eines Verfahrens gemäß einer Ausführungsform der Erfindung. In Schritt 601 wird ein Radarsignal von einer Elektronik eines kontinuierlichen Füllstandradargeräts erzeugt. In Schritt 602 wird dieses Radarsignal in Richtung Füllgutoberfläche abgestrahlt, in Schritt 603 dort reflektiert und in Schritt 604 wieder von der Elektronik detektiert. In Schritt 605 erfolgt eine Impedanzspektroskopie, um die Richtigkeit des gewonnen Messwerts mittels Impedanzspektroskopie zu verifizieren und ihn ggf. zu korrigieren bzw. um festzustellen, ob Anhaftungen/Verschmutzungen an der Messsonde bzw. der Antenne aufgetreten sind, oder ob die Messsonde/Antenne an der Einkoppelstelle vom Füllgut bedeckt ist bzw. in das Füllgut eintaucht.

Auch kann eine Dampfatmosphäre detektiert werden. Im Falle der Detektion einer Dampfatmosphäre bzw. der Detektion einer Verschmutzung kann der Messwert der Füllstandmessung entsprechend korrigiert werden.

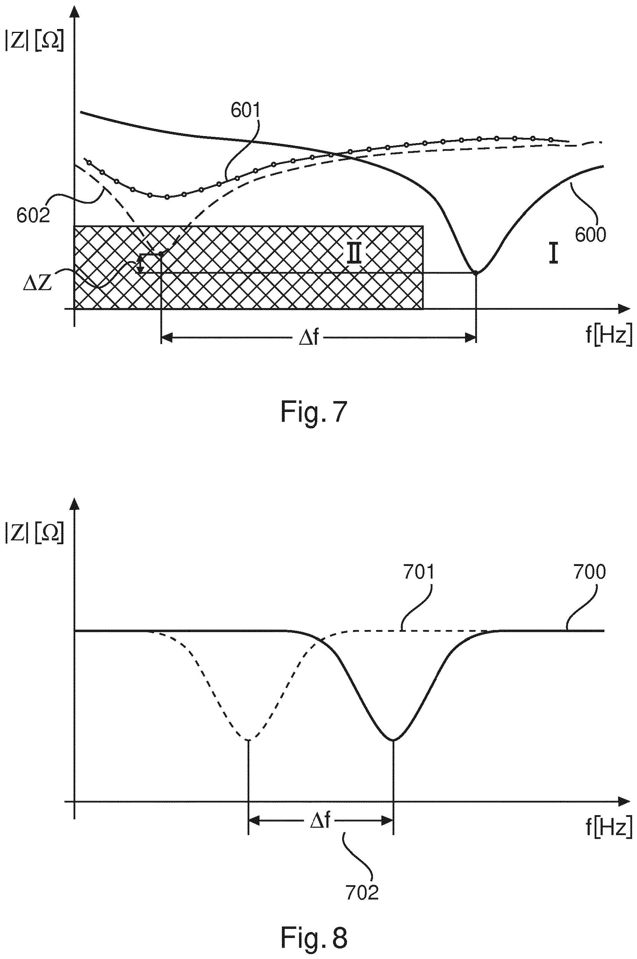

In Fig. 7 ist beispielhaft für das Medium Ketchup das Impedanzverhalten der Impedanzspektroskopieanordnung, aufgeführt. Dabei ist die Impedanz (Z) als Funktion der Frequenz (f) gezeigt. Die Kurve 600 beschreibt das Resonanzverhalten einer sauberen Messsonde. Kurve 601 zeigt das Verhalten einer mit Ketchup verschmutzten Messsonde. Ist die Messsonde komplett mit Ketchup bedeckt, ergibt sich das Resonanzverhalten der Kurve 602. Die Minima der beiden Messkurven 602 und 600 unterscheiden sich dabei in der Frequenz um Δf, wie in Figur 7 gezeigt. Die Impedanz der beiden Minima der Messkurven 602 und 600 unterscheiden sich um Δz. Befindet sich das Minimum der Resonanzkurve im Bereich I, so gibt die Auswerte- und Steuereinheit den Schaltbefehl leer aus. Befindet sich das Minimum jedoch im Bereich II, so wird der Vollzustand detektiert und ausgegeben. Die beiden definierten Schaltbereiche können ab Werk fest in den Sensor einprogrammiert oder durch einen Kundenabgleich eingestellt und verändert werden. Idealerweise sollten die Bereiche so definiert werden, dass für möglichst viele Medien diese Standardeinstellung ausreichend ist, da ein kundenseitiger Abgleich nicht erwünscht ist (zeitaufwendig). Grundsätzlich wird bei der Auswertung für jede Messung immer der gesamte Frequenzbereich durchlaufen und analysiert.

Fig. 8 beschreibt bespielhaft das Verhalten bei Vorhandensein einer überlagerten Atmosphäre, z.B. durch Dampf. Kurve 700 zeigt das Resonanzverhalten ohne überlagerte Atmosphäre, die Kurve 701 mit einer Atmosphäre. Analog Figur 7 ist in Figur 8 die Impedanz (Z) als Funktion der Frequenz (f) gezeigt. Durch die überlagerte Atmosphäre verschiebt sich abhängig vom DK-Wert die Position der Resonanzstelle um einen Betrag der Frequenz 702. Der DK-Wert wird bei Dampf hauptsächlich durch die Faktoren Druck und Temperatur bestimmt, wobei zwischen den beiden ein fester Zusammenhang besteht.

## Patentansprüche

1. Füllstandradar (100) zur kontinuierlichen Füllstandmessung, aufweisend:
eine Radaranordnung (101), eingerichtet zum Erzeugen und Abstrahlen eines Radarsignals zur Oberfläche eines Füllguts;
eine Impedanzspektroskopieanordnung (102), eingerichtet zum Detektieren einer Anhaftung an der Radaranordnung oder einer Gasphase des Füllguts mittels Impedanzspektroskopie;
wobei die Radaranordnung (101) eine Antenne (105) aufweist, die eingerichtet ist, das Radarsignal zur Oberfläche des Füllguts abzustrahlen;
**dadurch gekennzeichnet, dass** die Impedanzspektroskopieanordnung einen ringförmigen, streifenförmigen oder kreuzförmigen Messfühler (107, 108) aufweist, der in der Antenne (105) integriert ist.

2. Füllstandradar (100) zur kontinuierlichen Füllstandmessung, aufweisend:
eine Radaranordnung (101), eingerichtet zum Erzeugen und Abstrahlen eines Radarsignals zur Oberfläche eines Füllguts;
eine Impedanzspektroskopieanordnung (102), eingerichtet zum Detektieren einer Anhaftung an der Radaranordnung oder einer Gasphase des Füllguts mittels Impedanzspektroskopie;
wobei die Impedanzspektroskopieanordnung in der Radaranordnung (101) integriert ist,
wobei die Radaranordnung (101) eine Sonde (104) aufweist, die eingerichtet ist, das Radarsignal zur Oberfläche des Füllguts zu führen;
**dadurch gekennzeichnet, dass** die Impedanzspektroskopieanordnung (102) einen Messfühler (106) aufweist, der ringförmig um die Sonde (104) angeordnet und in einer Dichtung (109) der Sonde (104) integriert ist.

3. Füllstandradar (100) nach Anspruch 1,
wobei die Antenne (105) eingerichtet ist, das Radarsignal polarisiert abzustrahlen;
wobei die Polarisationsebene des Radarsignals einen Winkel zu dem Messfühler (107, 108) aufweist.

4. Füllstandradar (100) nach einem der vorhergehenden Ansprüche,
weiter aufweisend eine Auswerteelektronik (103), die eingerichtet ist, das von der Füllgutoberfläche reflektierte Radarsignal auszuwerten, um daraus den Füllstand zu berechnen, und die von der Impedanzspektroskopieanordnung (102) durchgeführte Messung auszuwerten, um festzustellen, ob eine Anhaftung an der Radaranordnung (101) vorliegt.

5. Füllstandradar (100) nach Anspruch 4,
wobei die Auswerteelektronik (103) die eingerichtet ist, mittels der Impedanzspektroskopie eine Anhaftung im Einkopplungsbereich (111) der Sonde (104) zu erkennen.

6. Verfahren zur kontinuierlichen Füllstandmessung mit einem Füllstandradar (100) nach einem der Ansprüche 1 bis 5, aufweisend die Schritte:
Detektieren einer Anhaftung an einer Radaranordnung (101) eines Füllstandradars (100) mittels Impedanzspektroskopie.

7. Verfahren nach Anspruch 6, aufweisend die Schritte:
Detektieren eines Füllstandes mit einer Füllstandmessanordnung, wobei der gewonnen Messwert mittels Impedanzspektroskopie verifiziert wird.

8. Programmelement, das, wenn es auf einer Auswerteelektronik (103) eines Füllstandradars (100) nach einem der Ansprüche 1 bis 5 ausgeführt wird, die Auswerteelektronik anleitet, den folgenden Schritt durchzuführen:
Detektieren einer Anhaftung an einer Radaranordnung (101) eines Füllstandradars (100) mittels Impedanzspektroskopie.

9. Computerlesbares Medium, auf dem ein Programmelement nach Anspruch 8 gespeichert ist.

## Claims

1. A fill level radar (100) for continuous fill level measurement, comprising:
a radar arrangement (101), configured to generate and emit a radar signal to the surface of a filling material,
an impedance spectroscopy arrangement (102), setup for detecting adhesion to the radar arrangement or a gas phase of the filling material by means of impedance spectroscopy,
wherein the radar arrangement (101) comprises an antenna (105) which is set up to emit the radar signal to the surface of the filling material,
**characterized in that**
the impedance spectroscopy arrangement comprises a ring-shaped, strip-shaped or cross-shaped measurement sensor (107, 108), which is integrated in the antenna.

2. The fill level radar (100) for continuous fill level measurement, comprising:
a radar arrangement (101), set up to generate and emit a radar signal to the surface of a filling material,
an impedance spectroscopy arrangement (102), setup for detecting adhesion to the radar arrangement or a gas phase of the filling material by means of impedance spectroscopy,
wherein the impedance spectroscopy arrangement is integrated in the radar arrangement (101),
wherein the radar arrangement (101) comprises a probe (104) which is set up to guide the radar signal to the surface of the filling material,
**characterized in that**
the impedance spectroscopy arrangement (102) comprises a measurement sensor (106) which is arranged in a ring shape around the probe (104) and is integrated in a seal (109) of the probe (104).

3. The fill level radar (100) according to claim 1,
wherein the antenna (105) is set up to emit the radar signal in polarized form;
wherein the polarization plane of the radar signal comprises an angle to the measurement sensor (107, 108).

4. The fill level radar (100) according to any one of the previous claims,
further comprising an evaluation electronics (103) which is setup to evaluate the radar signal reflected by the filling material surface in order to calculate the filling level out of it and to evaluate the measurement carried out by the impedance spectroscopy arrangement (102) in order to determine whether there is a adhesion to the radar arrangement (101).

5. The fill level radar (100) according to claim 4,
wherein the evaluation electronics (103) is setup to detect an adhesion in the coupling-area (111) of the probe (104) by means of impedance spectroscopy.

6. A method for continuous fill level measurement with a fill level radar (100) according to any one of claims 1 to 5, comprising the steps:
detecting adhesion to a radar arrangement (101) of a fill level radar (100) by means of impedance spectroscopy.

7. A method according to claim 6, comprising the steps:
detecting a fill level with a fill level measurement arrangement, wherein the measured value obtained will be verified by means of impedance spectroscopy.

8. A program member, which, if executed on an evaluation electronics (103) of a fill level radar (100) according to any one of claims 1 to 5, instructs the evaluation electronics to carry out the following step:
detecting adhesion to a radar arrangement (101) of a fill level radar (100) by means of impedance spectroscopy.

9. A computer-readable medium on which a program member according to claim 8 is stored.

## Revendications

1. Radar de détection de niveau de remplissage (100) destiné à la mesure de niveau de remplissage en continu, comportant :
un ensemble radar (101), conçu pour générer et émettre un signal radar vers la surface d'un produit de remplissage ; un ensemble de spectroscopie d'impédance (102), conçu pour détecter une adhérence sur l'ensemble radar ou une phase gazeuse du produit de remplissage par spectroscopie d'impédance ;
dans lequel l'ensemble radar (101) comporte une antenne (105), qui est conçue pour émettre le signal radar vers la surface du produit de remplissage ;
**caractérisé en ce que**
l'ensemble de spectroscopie d'impédance comporte un capteur (107, 108) en forme d'anneau, en forme de bande ou en forme de croix, qui est intégré dans l'antenne (105).

2. Radar de détection de niveau de remplissage (100) destiné à la mesure de niveau de remplissage en continu, comportant :
un ensemble radar (101), conçu pour générer et émettre un signal radar vers la surface d'un produit de remplissage ; un ensemble de spectroscopie d'impédance (102), conçu pour détecter une adhérence sur l'ensemble radar ou une phase gazeuse du produit de remplissage par spectroscopie d'impédance ;
dans lequel l'ensemble de spectroscopie d'impédance est intégré dans l'ensemble radar (101),
dans lequel l'ensemble radar (101) comporte une sonde (104), qui est conçue pour guider le signal radar jusqu'à la surface du produit de remplissage ;
**caractérisé en ce que**
l'ensemble de spectroscopie d'impédance (102) comporte un capteur (106), qui est disposé en forme d'anneau autour de la sonde (104) et qui est intégré dans un élément d'étanchéité (109) de la sonde (104).

3. Radar de détection de niveau de remplissage (100) selon la revendication 1,
dans lequel l'antenne (105) est conçue pour émettre le signal radar de manière polarisée ;
dans lequel le plan de polarisation du signal radar présente un angle par rapport au capteur (107, 108).

4. Radar de détection de niveau de remplissage (100) selon l'une des revendications précédentes,
comportant en outre une électronique d'évaluation (103), qui est conçue pour évaluer le signal radar réfléchi par la surface du produit de remplissage pour calculer le niveau de remplissage à partir de cette évaluation, et pour évaluer la mesure effectuée par l'ensemble de spectroscopie d'impédance (102) pour déterminer s'il y a une adhérence sur l'ensemble radar (101).

5. Radar de détection de niveau de remplissage (100) selon la revendication 4,
dans lequel l'électronique d'évaluation (103) est conçue pour reconnaître une adhérence dans la zone de couplage (111) de la sonde (104).

6. Procédé de mesure de niveau de remplissage en continu au moyen d'un radar de détection de niveau de remplissage (100) selon l'une des revendications 1 à 5, comportant les étapes :
détection d'une adhérence sur un ensemble radar (101) d'un radar de détection de niveau de remplissage (100) par spectroscopie d'impédance.

7. Procédé selon la revendication 6, comportant les étapes : détection d'un niveau de remplissage au moyen d'un ensemble de mesure de niveau de remplissage, la valeur de mesure obtenue étant vérifiée par spectroscopie d'impédance.

8. Élément de programme qui, quand il est exécuté sur une électronique d'évaluation (103) d'un radar de détection de niveau de remplissage (100) selon l'une des revendications 1 à 5, amène l'électronique d'évaluation à exécuter l'étape suivante :
détection d'une adhérence sur un ensemble radar (101) d'un radar de détection de niveau de remplissage (100) par spectroscopie d'impédance.

9. Support lisible par ordinateur, sur lequel est enregistré un élément de programme selon la revendication 8.
